# EUROPEAN PATENT SPECIFICATION

(11) **EP 3 089 247 B1**
(45) Date of publication and mention of the grant of the patent: **11.09.2019**
(21) Application number: 14874497.2
(22) Date of filing: 22.12.2014
(51) Int. Cl.: H01M 4/86, H01M 4/88, H01M 4/92, H01M 8/0234, H01M 8/0243

(54) **CONDUCTIVE FILM, GAS DIFFUSION LAYER FOR FUEL CELLS, CATALYST LAYER FOR FUEL CELLS, ELECTRODE FOR FUEL CELLS, MEMBRANE ELECTRODE ASSEMBLY FOR FUEL CELLS, AND FUEL CELL**
LEITFÄHIGER FILM, GASDIFFUSIONSSCHICHT FÜR BRENNSTOFFZELLEN, KATALYSATORSCHICHT FÜR BRENNSTOFFZELLEN, ELEKTRODE FÜR BRENNSTOFFZELLEN, MEMBRANELEKTRODENANORDNUNG FÜR BRENNSTOFFZELLEN UND BRENNSTOFFZELLE
PELLICULE CONDUCTRICE, COUCHE DE DIFFUSION DE GAZ POUR PILES À COMBUSTIBLE, COUCHE DE CATALYSEUR POUR PILES À COMBUSTIBLE, ÉLECTRODE POUR PILES À COMBUSTIBLE, ENSEMBLE MEMBRANE-ÉLECTRODE POUR PILES À COMBUSTIBLE ET PILE À COMBUSTIBLE

(30) Priority: 27.12.2013 JP 2013273222
(43) Date of publication of application: 02.11.2016
(73) Proprietor: Zeon Corporation, Tokyo 100-8246 (JP)
(72) Inventor: YOSHIWARA, Akihiko, Tokyo 100-8246 (JP); KOJIMA, Kiyoshige, Tokyo 100-8246 (JP)
(74) Representative: Maiwald Patent- und Rechtsanwaltsgesellschaft mbH
(86) International application number: PCT/JP2014/006390
(87) International publication number: WO 2015/098089

(56) References cited:
- EP-A1- 2 787 044
- EP-A1- 3 157 027
- WO-A1-2005/043656
- WO-A1-2013/080912
- JP-A- 2004 362 875
- JP-A- 2005 322 449
- JP-A- 2005 322 449
- JP-A- 2006 156 029
- JP-A- 2011 124 237
- JP-A- 2014 154 459
- US-A1- 2008 318 049

## Description

### TECHNICAL FIELD

The present disclosure relates to a conductive film, a fuel cell-use gas diffusion layer, a fuel cell-use catalyst layer, a fuel cell-use electrode, a fuel cell-use membrane-electrode assembly, and a fuel cell.

### BACKGROUND

In recent years, conductive films including carbon-based materials have become widely used, for example, as conductive films used in touch panels, solar cells, and so forth and as constituent materials of gas diffusion layers and catalyst layers of electrodes used in fuel cells. For example, PTL 1 discloses electrode materials including a carbon fiber in which the average fiber diameter is 0.05 - 0.3 µm. In the invention of PTL 2, it was an object to provide a carbon nanotube composition having higher electrical conductivity, as can be seen from PTL 3 (PTL 2 is the publication of a PCT application in Japanese, of which the corresponding European regional phase has been later-published in English language as PTL 3). PTL 2 discloses in particular a method for producing a carbon nanotube composition including: a dispersing step of dispersing a carbon nanotube in a solvent by carrying out a dispersion treatment that brings about a cavitation effect, the carbon nanotube having an average diameter (Av) and a diameter distribution (3σ) that satisfy 0.60>3σ/Av>0.20; and a mixing step of mixing, with latex, the carbon nanotube slurry obtained in the dispersing step. In addition to conductivity, conductive films such as described above are expected to have gas diffusivity. This is particularly true in the case of conductive films that can be used as gas diffusion layers. As one conventional example of such a conductive film, a conductive film has been proposed that, in formation of a catalyst electrode layer used in a fuel cell, is formed using an application liquid for catalyst electrode layer formation including catalyst-supporting carbon black and catalyst-supporting carbon nanotubes (for example, refer to PTL 4). As a result of the catalyst electrode layer being formed using the application liquid for catalyst electrode layer formation described in PTL 4, conductivity of the catalyst electrode layer can be improved without losing gas diffusivity in the catalyst electrode layer.

### CITATION LIST

### Patent Literature

PTL 1: JP 2006-156029 A
PTL 2: WO 2013/080912 A1
PTL 3: EP 2 787 044 A1
PTL 4: JP 2005-322449 A

### SUMMARY

### (Technical Problem)

However, there is still room for improvement in terms of conductivity and gas diffusivity of a catalyst electrode layer composed of a conductive film formed using the application liquid for catalyst electrode layer formation described in PTL 4.

In consideration of the circumstances thus described, an objective of the present disclosure is to provide a conductive film having excellent conductivity and gas diffusivity that is useful, for example, as a material forming a gas diffusion layer or a catalyst layer of an electrode in a fuel cell, and also to provide a fuel cell-use gas diffusion layer, a fuel cell-use catalyst layer, a fuel cell-use electrode, and a fuel cell-use membrane-electrode assembly.

Another objective of the present disclosure is to provide a fuel cell having excellent conductivity and gas diffusivity, and displaying good electrical characteristics.

### (Solution to Problem)

The inventors conducted diligent investigation in order to solve the problems described above. As a result of this investigation, the inventors found that a conductive film including a specific ratio of carbon nanotubes having an average diameter (Av) and a diameter standard deviation (σ) satisfying a specific relationship and a conductive carbon that is different from the carbon nanotubes has excellent conductivity and gas diffusivity, and is useful, for example, as a material forming a gas diffusion layer or a catalyst layer of an electrode in a fuel cell. These findings led to the present disclosure.

Specifically, in order to beneficially solve the problems described above, a presently disclosed conductive film includes carbon nanotubes having an average diameter (Av) and a diameter standard deviation (σ) satisfying a relationship 0.60 > (3σ/Av) > 0.20 and a conductive carbon that is different from the carbon nanotubes, wherein a content ratio of the carbon nanotubes relative to the conductive carbon (carbon nanotubes/conductive carbon) is from 1/99 to 99/1 as a mass ratio, wherein the average diameter Av is at least 0.5 nm and no greater than 15 nm, and wherein the conductive carbon consists of solely a conductive carbon other than carbon nanotubes. The conductive film has excellent conductivity and gas diffusivity, and is useful, for example, as a material forming a gas diffusion layer or a catalyst layer of an electrode in a fuel cell.

In the presently disclosed conductive film, the carbon nanotubes preferably support metal nanoparticles. A conductive film having even better conductivity and catalytic activity can be obtained as a result of metal nanoparticle-supporting carbon nanotubes being used.

In the presently disclosed conductive film, the metal nanoparticles are preferably platinum nanoparticles. As a result, catalyst layer catalytic activity can be improved in a situation in which the presently disclosed conductive film is used as a fuel cell-use catalyst layer.

In the presently disclosed conductive film, the carbon nanotubes are preferably surface treated carbon nanotubes. A conductive film having even better conductivity and catalytic activity can be obtained as a result of surface treated carbon nanotubes being used.

The presently disclosed conductive film preferably constitutes a fuel cell-use gas diffusion layer. As a result, the aforementioned fuel cell-use gas diffusion layer has excellent conductivity and gas diffusivity, and is useful, for example, as a material forming an electrode in a fuel cell.

Alternatively, the presently disclosed conductive film preferably constitutes a fuel cell-use catalyst layer. As a result, the above-described fuel cell-use catalyst layer has excellent conductivity, gas diffusivity, and also catalytic activity, and is useful, for example, as a material forming an electrode in a fuel cell.

Furthermore, in order to beneficially solve the problems described above, a presently disclosed fuel cell-use electrode preferably includes either or both of the fuel cell-use gas diffusion layer and the fuel cell-use catalyst layer described above. As a result, the above-described fuel cell-use electrode has excellent conductivity and gas diffusivity, and is useful as an electrode of a fuel cell.

Furthermore, in order to beneficially solve the problems described above, a presently disclosed fuel cell-use membrane-electrode assembly preferably includes the fuel cell-use electrode described above and an electrolyte membrane. As a result, the above-described fuel cell-use membrane-electrode assembly has excellent conductivity and gas diffusivity, and can be beneficially adopted in a fuel cell.

Furthermore, in order to beneficially solve the problems described above, a presently disclosed fuel cell preferably includes the fuel cell-use membrane-electrode assembly described above. As a result, the above-described fuel cell has excellent conductivity and gas diffusivity, and displays good electrical characteristics.

### (Advantageous Effect)

The present disclosure provides a conductive film having excellent conductivity and gas diffusivity that is useful, for example, as a material forming a gas diffusion layer or a catalyst layer of an electrode in a fuel cell, and also provides a fuel cell-use gas diffusion layer, a fuel cell-use catalyst layer, a fuel cell-use electrode, and a fuel cell-use membrane-electrode assembly. The present disclosure can also provide a fuel cell having excellent conductivity and gas diffusivity, and displaying good electrical characteristics.

### BRIEF DESCRIPTION OF THE DRAWING

In the accompanying drawing:

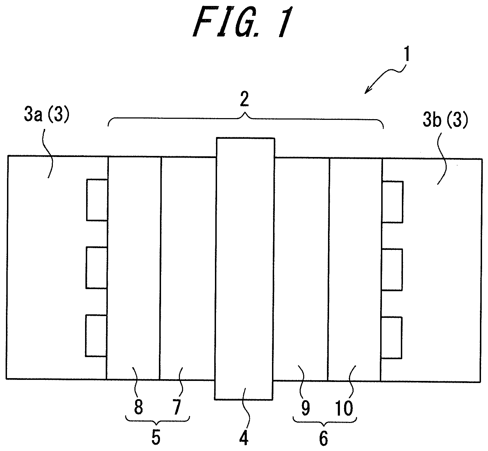

FIG. 1 is a schematic view illustrating main constituents in an example of a presently disclosed fuel cell.

### DETAILED DESCRIPTION

The following provides a detailed description of the present disclosure, divided into sections relating to (1) a conductive film; (2) a fuel cell-use gas diffusion layer and a fuel cell-use catalyst layer; and (3) a fuel cell-use electrode, a fuel cell-use membrane-electrode assembly, and a fuel cell. It will be appreciated that the present disclosure is not limited to the following embodiments.

### (1) Conductive film

A presently disclosed conductive film includes carbon nanotubes having an average diameter (Av) and a diameter standard deviation (σ) satisfying a relationship 0.60 > (3σ/Av) > 0.20 and a conductive carbon that is different from the carbon nanotubes. A content ratio of the carbon nanotubes relative to the conductive carbon (carbon nanotubes/conductive carbon) is from 1/99 to 99/1 as a mass ratio. The average diameter Av of the carbon nanotubes is at least 0.5 nm and no greater than 15 nm, and the conductive carbon consists of solely a conductive carbon other than carbon nanotubes.

Carbon nanotubes used in the present disclosure that satisfy the relationship described above are hereinafter also referred to as "carbon nanotubes (A)."

### (Carbon nanotubes (A))

The carbon nanotubes used in the present disclosure have an average diameter (Av) and a diameter standard deviation (σ) satisfying the relationship 0.60 > (3σ/Av) > 0.20.

It should be noted that the term "carbon nanotubes (A)" is used herein as a general term for collectively referring to specific carbon nanotubes constituting the carbon nanotubes (A) and the term "diameter" is used herein to refer to the external diameter of these specific carbon nanotubes.

Furthermore, the average diameter (Av) and the diameter standard deviation (σ) of the carbon nanotubes (A) in the present disclosure are respectively a sample average value and a sample standard deviation. These values are obtained as an average value and a standard deviation when the diameters of 100 randomly selected carbon nanotubes are measured by observation under a transmission electron microscope. The term 3σ in the above relationship is the standard deviation (σ) multiplied by a factor of 3.

A conductive film that is useful as a gas diffusion layer or a catalyst layer of an electrode can be obtained through use of the carbon nanotubes (A) having an average diameter (Av) and a standard deviation (σ) satisfying the relationship 0.60 > (3σ/Av) > 0.20.

Herein, 3σ/Av expresses the spread of a diameter distribution of the carbon nanotubes (A), and a larger value for 3σ/Av indicates that the carbon nanotubes (A) have a wider diameter distribution. In the present disclosure, the diameter distribution is preferably a normal distribution.

The diameter distribution of the carbon nanotubes (A) can be obtained by observation using a transmission electron microscope. Specifically, the diameter distribution is obtained by measuring the diameters of 100 randomly selected carbon nanotubes by observation under the transmission electron microscope, using the measurement results to plot obtained data with the diameter on the horizontal axis and the probability density of the diameter on the vertical axis, and making a Gaussian approximation. Although a large 3σ/Av value can be obtained, for example, by combining a plurality of types of carbon nanotubes obtained by different production methods, it is difficult to obtain a normal distribution for the diameter distribution is such a situation. The carbon nanotubes (A) in the present disclosure may be carbon nanotubes obtained by a single production method or carbon nanotubes obtained by blending these carbon nanotubes with an amount of carbon nanotubes obtained by another production method that does not affect the diameter distribution of the carbon nanotubes obtained by the single production method.

For obtaining a conductive film that is more useful as a conductive layer or a catalyst layer of an electrode or the like, the average diameter (Av) of the carbon nanotubes (A) is at least 0.5 nm and no greater than 15 nm, and preferably at least 1 nm and no greater than 10 nm.

The average length of the carbon nanotubes (A) is preferably at least 0.1 µm and no greater than 1 cm, and more preferably at least 0.1 µm and no greater than 1 mm. An average length of the carbon nanotubes (A) in the above-described range facilitates formation of a conductive film that is more useful as a conductive layer or a catalyst layer of an electrode or the like.

The average length of the carbon nanotubes (A) can for example be calculated by measuring the lengths of 100 randomly selected carbon nanotubes using a transmission electron microscope.

A BET specific surface area of the carbon nanotubes (A) according to nitrogen gas adsorption is preferably at least 100 m²/g, more preferably at least 600 m²/g, and particularly preferably at least 700 m²/g, and is preferably no greater than 2,500 m²/g. Furthermore, a BET specific surface area of the carbon nanotubes (A) according to water vapor adsorption is preferably at least 0.01 m²/g, and more preferably at least 0.1 m²/g, and is preferably no greater than 100 m²/g, more preferably no greater than 50 m²/g, and particularly preferably no greater than 30 m²/g.

A ratio of the BET specific surface area according to water vapor adsorption relative to the BET specific surface area according to nitrogen gas adsorption (water vapor adsorption BET specific surface area/nitrogen gas adsorption BET specific surface area) is normally at least 0.0001 and no greater than 0.2, and preferably at least 0.0005 and no greater than 0.15. These specific surface areas can for example be measured using a BELSORP®-max (BELSORP is a registered trademark in Japan, other countries, or both) produced by Bel Japan Inc.

Specific surface areas of the carbon nanotubes (A) in the above-described ranges facilitate formation of a conductive film that is more useful as a conductive layer or a catalyst layer of an electrode or the like.

In temperature programmed desorption from 150°C to 950°C, the carbon nanotubes (A) preferably have a carbon monoxide (CO) desorption of at least 100 µmol/g and no greater than 10,000 µmol/g, and a carbon dioxide (CO₂) desorption of at least 1 µmol/g and no greater than 3,000 µmol/g. The CO and CO₂ desorptions can for example be measured using a TPD-1-ATw fully-automated temperature programmed desorption spectrometer produced by Bel Japan Inc. It is preferable for CO and CO₂ desorptions of the carbon nanotubes (A) to be in the above-described ranges in order to raise dispersibility.

The carbon nanotubes constituting the carbon nanotubes (A) may be single-walled carbon nanotubes or multi-walled carbon nanotubes. From a viewpoint of improving performance (for example, conductivity and gas diffusivity) of an obtained conductive film or the like, the carbon nanotubes are preferably carbon nanotubes having at least one wall and no greater than five walls, and are more preferably single-walled carbon nanotubes.

Furthermore, the carbon nanotubes (A) preferably include micropores. The micropores are preferably pores having a diameter of less than 2 nm and are present in an amount such that micropore volume obtained by the method described below is preferably at least 0.4 mL/g, more preferably at least 0.43 mL/g, and particularly preferably at least 0.45 mL/g, with a normal upper limit of approximately 0.65 mL/g. It is preferable that the carbon nanotubes (A) have micropores such as described above from a viewpoint of raising dispersibility. The micropore volume can for example be adjusted through appropriate alteration of a preparation method and preparation conditions of the carbon nanotubes.

Herein, "micropore volume (Vp)" can be calculated from equation (I)-Vp = (V/22,414) × (M/ρ)-by measuring a nitrogen adsorption isotherm of the carbon nanotubes (A) at liquid nitrogen temperature (77 K) and by setting an amount of adsorbed nitrogen at a relative pressure P/P0 = 0.19 as V. It should be noted that P is a measured pressure at adsorption equilibrium, P0 is a saturated vapor pressure of liquid nitrogen at time of measurement, and, in equation (I), M is a molecular mass of 28.010 of the adsorbate (nitrogen) and ρ is a density of 0.808 g/cm³ of the adsorbate (nitrogen) at 77 K. The micropore volume can for example be obtained using a BELSORP®-mini (produced by Bel Japan Inc.).

The carbon nanotubes (A) can for example be efficiently produced through a method (super growth method; refer to WO2006/011655) in which, during synthesis of carbon nanotubes through chemical vapor deposition (CVD) by supplying a feedstock compound and a carrier gas onto a substrate (also referred to below as a "substrate for CNT production") having a catalyst layer for carbon nanotube production (also referred to below as a "catalyst layer for CNT production") on the surface thereof, catalytic activity of the catalyst layer for CNT production is dramatically improved by providing a trace amount of an oxidizing agent in the system, wherein the catalyst layer is formed on the surface of the substrate through a wet process and a gas having acetylene as a main component (for example, a gas including at least 50% by volume of acetylene) is used as a feedstock gas. Carbon nanotubes obtained through the super growth method are hereinafter also referred to as "SGCNTs."

No specific limitations are placed on a support used to support the catalyst layer for CNT production in the substrate for CNT production other than allowing the catalyst layer for CNT production to be held on the surface thereof.

A material of the support may for example be a metal such as iron, nickel, chromium, molybdenum, tungsten, titanium, aluminum, manganese, cobalt, copper, silver, gold, or platinum; an alloy including any of these metals; an oxide including any of these metals; a semiconductor such as silicon; or a non-metal such as quartz, glass, mica, graphite, or diamond.

In terms of shape, the support may be a flat plate, a thin film, or a block.

The catalyst constituting the catalyst layer for CNT production can be a conventional, commonly known catalyst for carbon nanotube production, specific examples of which include metal catalysts such as iron chloride, iron, iron-molybdenum, alumina-iron, alumina-cobalt, and alumina-iron-molybdenum.

The feedstock compound may for example be a hydrocarbon compound such as methane, ethane, propane, ethylene, propylene, or acetylene; an alcohol compound such as methanol or ethanol; a ketone compound such as acetone; or carbon monoxide.

The carrier gas may for example be helium, argon, hydrogen, nitrogen, neon, krypton, carbon dioxide, or chlorine.

The oxidizing agent may for example be water vapor, oxygen, ozone, or hydrogen sulfide. The oxidizing agent content in the gas phase is normally at least 10 ppm and no greater than 10,000 ppm.

The pressure in the reaction system is preferably at least 10² Pa and no greater than 10⁷ Pa (100 atm).

The temperature in the reaction system during production of the carbon nanotubes (A) can be appropriately set in accordance with the catalyst, the feedstock compound, and the oxidizing agent. The temperature is normally at least 400°C and no greater than 1200°C.

The carbon nanotubes (A) used in the present disclosure may be surface treated carbon nanotubes obtained through surface treatment of carbon nanotubes according to a commonly known method. For example, the carbon nanotubes (A) may be surface treated carbon nanotubes into which a functional group, such as a carboxyl group, has been introduced. Functional group introduction can be performed by a commonly known oxidation treatment method in which ozone, hydrogen peroxide, sulfuric acid, nitric acid, or the like is used.

Alternatively, the carbon nanotubes (A) may be surface treated carbon nanotubes obtained by bringing carbon nanotubes into contact with a supercritical fluid, a subcritical fluid, or a high-temperature, high-pressure fluid. The fluid brought into contact with the carbon nanotubes may for example be water (critical temperature: 647.3 K, critical pressure: 22.12 MPa), methanol (critical temperature: 512.6 K, critical pressure: 8.1 MPa), ethanol (critical temperature: 516.2 K, critical pressure: 6.1 MPa), ammonia (critical temperature: 405.6 K, critical pressure: 11.4 MPa), or carbon dioxide (critical temperature: 304.15 K, critical pressure: 7.38 MPa). It is normally preferable for water or carbon dioxide to be used as the fluid. A supercritical state or a subcritical state of the fluid can be obtained by using the critical temperature and the critical pressure thereof as indicators for placing the fluid in a desired temperature and pressure environment. A high-temperature, high-pressure state of the fluid can be obtained by placing the fluid at a temperature at least as high as a boiling point (at 0.1 MPa) of the fluid and at a pressure exceeding 1 atm (however, a high-temperature, high-pressure state cannot be obtained when a supercritical state or a subcritical state is obtained under such conditions). For example, when water is used as the fluid, a high-temperature, high-pressure state can be obtained by placing the water in an environment with a temperature of at least 200°C and a pressure of at least 0.2 MPa. Among the examples of fluids listed above, ammonia, carbon dioxide, and the like have a small oxidizing power on their own and are therefore preferably mixed with high-pressure oxygen or the like in order to enhance their oxidizing power.

Contacting of the carbon nanotubes and the fluid may be performed by a batch process or a continuous process. Contacting of the carbon nanotubes and the fluid can for example be performed by sealing the carbon nanotubes and the fluid in a reaction vessel, heating in the presence of an inert gas such as nitrogen until the temperature in the reaction vessel reaches a desired temperature, and maintaining this state for at least 5 minutes and no greater than 300 minutes while maintaining a desired internal pressure. Although no specific limitations are place on the heating rate and the cooling rate of the contents of the reaction vessel, these rates are preferably adjusted as appropriate in order that the fluid that is used quickly reaches the desired state during heating and the reaction system quickly returns to normal temperature and pressure during cooling. The contacting amount of the fluid is normally at least 10 parts by mass and no greater than 1,000 parts by mass relative to 1 part by mass of the carbon nanotubes.

Once contacting of the carbon nanotubes and the fluid has been performed, the inside of the reaction vessel is at extremely high temperature and pressure, and is therefore cooled to room temperature and brought back to atmospheric pressure. Thereafter, the fluid is for example removed by decantation as desired and the resultant surface treated carbon nanotubes are for example washed with water. Such washing is normally performed until washing waste water becomes neutral. In any event, once the high-temperature and high-pressure state is released after contacting of the carbon nanotubes and the fluid in the reaction vessel, the fluid and the surface treated carbon nanotubes can be easily separated by removing the fluid from the reaction vessel. The density of the fluid can be continuously altered through control of the temperature and pressure, thereby enabling continuous alteration of reactivity. Surface treated carbon nanotubes obtained as described above are normally dried as appropriate after separation from the fluid in order that the carbon nanotubes can be used as a dry powder.

The method by which the carbon nanotubes are surface treated is preferably gas phase treatment by ozone or liquid phase treatment by hydrogen peroxide, nitric acid, or sulfuric acid due to the simplicity of operation in these treatments.

The carbon nanotubes (A) used in the present disclosure may support metal nanoparticles. A conductive film having even better conductivity and catalytic activity can be obtained using carbon nanotubes (A) supporting metal nanoparticles.

The metal nanoparticles are metal particles having nanometer-scale particle diameters.

The metal nanoparticles preferably have an average particle diameter of at least 0.5 nm and no greater than 15 nm. The standard deviation of the particle diameters of the metal nanoparticles is preferably no greater than 1.5 nm. The average particle diameter and the particle diameter standard deviation of the metal nanoparticles can be obtained by measuring the particle diameters of 100 randomly selected metal nanoparticles based on an image thereof observed using a transmission electron microscope.

Examples of metal nanoparticles that can be used include nanoparticles of metals in groups 6 to 14 of the periodic table.

Examples of metals in groups 6 to 14 of the periodic table include Cr, Mn, Fe, Co, Ni, Cu, Zn, Ga, Ru, Rh, Pd, Ag, Cd, Sn, Sb, W, Re, Ir, Pt, Au, and Pb. Among these metals, platinum is preferable in a situation in which the presently disclosed conductive film is to be used as a fuel cell-use catalyst layer because platinum facilitates formation of a fuel cell-use catalyst layer having even better catalytic activity.

Any one of the metals listed above or a combination of any two or more of the metals listed above may be used.

Although no specific limitations are placed on the amount of the metal nanoparticles supported by the carbon nanotubes (A), the amount is preferably at least 1 part by mass relative to 100 parts by mass of the carbon nanotubes (A). A supported amount of metal nanoparticles of at least 1 part by mass facilitates formation of a conductive film that is more useful as a catalyst layer. Although the catalytic activity is thought to continue to improve as the supported amount of metal nanoparticles increases, when supporting ability of the carbon nanotubes (A) and economic factors are taken into consideration, an upper limit for the supported amount of metal nanoparticles is normally no greater than 30,000 parts by mass relative to 100 parts by mass of the carbon nanotubes (A).

No specific limitations are placed on the method by which the metal nanoparticles are caused to be supported by the carbon nanotubes. For example, the metal nanoparticles can be caused to be supported by the carbon nanotubes through a commonly known method in which a metal precursor is reduced in the presence of the carbon nanotubes (A) to produce the metal nanoparticles.

Specifically, a metal nanoparticle support composed of the carbon nanotubes (A) and produced metal nanoparticles supported thereon can be obtained through a method in which a dispersion liquid including the carbon nanotubes (A) and a dispersant is prepared, a metal precursor is subsequently added, solvent is evaporated, and the metal precursor is reduced by heating under hydrogen gas flow or a method in which a dispersion liquid including the carbon nanotubes (A), a combined reductant and solvent such as ethylene glycol, and a metal precursor is prepared, and the metal precursor is reduced under heating by an oil bath or microwaves.

The metal precursor is a compound from which the metal nanoparticles can be formed through a reduction reaction. No specific limitations are placed on the metal precursor other than enabling desired metal nanoparticles to be obtained and being soluble in the solvent that is used. Specific examples of metal precursors that can be used include Pt(NH₃)₂(NO₂)₂, (NH₄)₂[RuCl₆], (NH₄)₂[RuCl₅(H₂O)], H₂PtCl₄, H₂PtCl₆, K₂PtCl₄, K₂PtCl₆, H₂[AuCl₄], (NH₄)₂[AuCl₄], and H[Au(NO₃)₄]H₂O. Any one of the metal precursors listed above or a combination of any two or more of the metal precursors listed above may be used.

Although the dispersant may be a low-molecular mass compound or a high-molecular mass compound so long as the compound has dispersing ability with respect to the carbon nanotubes (A), a high-molecular mass compound is preferable for obtaining excellent dispersibility and dispersion stability. The high-molecular mass compound may be a synthetic or natural high-molecular mass compound. An ionic high-molecular mass compound is preferable for obtaining excellent dispersibility of the carbon nanotubes (A). The ionic high-molecular mass compound preferably has an ionic functional group such as a sulfonic acid or carboxylic acid functional group, and among high-molecular mass compounds having such functional groups, is preferably a polystyrene sulfonate, chondroitin sulfate, hyaluronic acid, carboxymethyl cellulose, or a derivative of any of the preceding examples, and is particularly preferably carboxymethyl cellulose or a derivative thereof.

### (Conductive carbon)

The conductive carbon used in the present disclosure is different from the carbon nanotubes (A) described above. While conductive carbons in general may be carbon nanotubes, e.g. carbon nanotubes having an average diameter (Av) and a diameter standard deviation (σ) that do not satisfy the relationship 0.60 > (3σ/Av) > 0.20, the conductive carbon used in the present disclosure consists solely of a conductive carbon other than carbon nanotubes, such as carbon particles of carbon black, activated carbon, coke, natural graphite, or artificial graphite, carbon nanohorns, or carbon nanofibers. If the conductive film were to be produced from only the carbon nanotubes (A) without blending with the conductive carbon, there is a concern that a porous structure may not be formed in the conductive film. However, in conductive film production according to the present disclosure, a conductive film having a porous structure can be obtained as a result of the carbon nanotubes (A) being blended with the conductive carbon that is different from the carbon nanotubes (A). Gas diffusivity of the conductive film can be improved as a result.

Although no specific limitations are placed on the particle size of the conductive carbon, from a viewpoint of controlling the thickness of the conductive film to an appropriate range, an average primary particle diameter of the conductive carbon is preferably at least 5 nm, and more preferably at least 10 nm, and is preferably no greater than 200 nm, more preferably no greater than 100 nm, further preferably no greater than 50 nm, and particularly preferably no greater than 30 nm.

Use of carbon black as the conductive carbon is preferable, in particular, from a viewpoint of improving conductivity. Examples of carbon black include Ketjen black, acetylene black, BLACK PEARLS, and VULCAN. Use of Ketjen black as the conductive carbon is preferable, in particular, from a viewpoint of obtaining excellent conductivity and durability, whereas use of acetylene black as the conductive carbon is preferable, in particular, from a viewpoint of corrosion resistance. Acetylene black has excellent corrosion resistance because the fine crystal structure of particles develops into a graphitic shape and the carbon content is high compared to other types of carbon black.

No specific limitations are placed on the production method for the conductive carbon which can for example be produced by a common method.

Furthermore, heat treated carbon black is preferably used as the conductive carbon. As a result, conductive carbon can be obtained that has not only excellent conductivity, but also excellent corrosion resistance. The heat treated carbon black that is used normally has a G band half width of no greater than 70 cm⁻¹ in a Raman spectrum. The higher the crystallinity of the conductive carbon, the more similar a three-dimensional crystal lattice thereof is to a graphitic structure. A small G band half width indicates that carbon with high crystallinity, excellent corrosion resistance, and low impurity content is obtained.

Herein, the Raman spectrum is a spectrum that indicates which wavelengths of light are scattered with what intensities according to the Raman effect. In the present disclosure, the Raman spectrum is expressed with the wavenumber (cm⁻¹) on one axis and the intensity on the other axis, and can be used to calculate the G band half width. The term "G band" refers to a peak indicating carbon crystallinity that appears near 1580 cm⁻¹ in a spectrum obtained through Raman measurement of carbon particles. Furthermore, the term "half width" refers to the width over which a specific absorption band spreads at half the height of a peak height in the absorption band and is a value used to judge a distribution state of the specific absorption band.

Raman measurement of the conductive carbon can be performed using a commonly known Raman spectrometer. No specific limitations are placed on the Raman spectrometer other than enabling G band measurement with a certain level of reproducibility. However, in a situation in which there is disparity in the shape or position of the G band depending on the Raman spectrometer that is used, a Raman spectrum measured using a specific microscopic laser Raman spectrometer (Holo Lab 5000R produced by Kaiser Optical System Inc.) under specific measurement conditions (excitation wavelength: 532 nm; output: 3 mW; measurement time: 30 s exposure × 5 integrations) is used as a reference spectrum.

Note that in a situation in which another absorption band is present near the G band and it is not easy to visually determine the half width from the spectrum due to joining of the G band with the other absorption band, the half width can normally be determined using analytical software accompanying the Raman spectrometer. For example, the half width can be determined through processing in which a straight base line is drawn in a region in which the G band peak is included, Lorentz wave shape curve fitting is implemented, and G band peak separation is performed.

The carbon black heat treatment can for example be performed by heat treating the carbon black described above at a high temperature of at least 1500°C and no greater than 3000°C. Although no specific limitations are placed on the heat treatment time, an approximate time of at least 1 hour and no greater than 10 hours is sufficient.

In particular, in a situation in which acetylene black is used as the conductive carbon, the half width of a G band obtained from a Raman spectrum is preferably no greater than 55 cm⁻¹, more preferably no greater than 52 cm⁻¹, and particularly preferably no greater than 49 cm⁻¹ from a viewpoint of improving corrosion resistance. In the case of Ketjen black, the half width is normally no greater than 70 cm⁻¹, and preferably no greater than 68 cm⁻¹ from a viewpoint of improving corrosion resistance and conductivity.

### (Mass ratio of carbon nanotubes and conductive carbon)

The presently disclosed conductive film includes the carbon nanotubes (A) and the conductive carbon that is different from the carbon nanotubes (A). Furthermore, in the presently disclosed conductive film, the content ratio of the carbon nanotubes (A) and the conductive carbon that is different from the carbon nanotubes (A) (carbon nanotubes/conductive carbon) is from 1/99 to 99/1, and preferably from 5/95 to 95/5 as a mass ratio. As a result of the carbon nanotubes (A) and the conductive carbon that is different from the carbon nanotubes (A) having a content ratio in the conductive film that is within the above-described range, a balance of high levels of both gas diffusivity and conductivity can be achieved for the conductive film.

Although no specific limitations are placed on the thickness of the conductive film, the thickness is normally at least 50 nm and no greater than 1 mm.

A conductive film that is more useful as a conductive layer or a catalyst layer of an electrode or the like can be obtained as a result of the film thickness of the conductive film being in the above-described range.

The conductive film may include other components besides the carbon nanotubes (A) and the conductive carbon that is different from the carbon nanotubes (A) to the extent that these other components do not interfere with the effects of the present disclosure.

Examples of these other components include a binder, a conductive additive, a dispersant, and a surfactant. Commonly known components may be used as appropriate as such components.

The presently disclosed conductive film can for example be obtained as a transfer support-mounted conductive film by preparing a dispersion liquid for conductive film formation including the carbon nanotubes (A) and the conductive carbon that is different from the carbon nanotubes (A), applying the dispersion liquid for conductive film formation onto a transfer support, and drying the resultant applied film. This dispersion liquid may hereinafter also be referred to simply as an "ink."

A solvent used to prepare the dispersion liquid for conductive film formation (ink) may for example be water; an alcohol such as methanol, ethanol, propanol, or ethylene glycol; a ketone such as acetone or methyl ethyl ketone; an ether such as tetrahydrofuran, dioxane, or diglyme; an amide such as N,N-dimethylformamide, N,N-dimethylacetamide, N-methyl-2-pyrrolidone, or 1,3-dimethyl-2-imidazolidinone; or a sulfur-containing solvent such as dimethyl sulfoxide or sulfolane. Any one of the solvents listed above or a combination of any two or more of the solvents listed above may be used.

The dispersion liquid for conductive film formation (ink) can be obtained by mixing the carbon nanotubes (A) and the conductive carbon that is different from the carbon nanotubes (A) in the solvent, in addition to "other components" listed in the section relating to the conductive film as required, and dispersing the carbon nanotubes (A) and the conductive carbon that is different from the carbon nanotubes (A).

The mixing and dispersing can be performed by commonly known methods. For example, a method may be adopted that involves using a nanomizer, an ultimizer, an ultrasonic disperser, a ball mill, a sand grinder, a dyno-mill, a spike mill, a DCP mill, a basket mill, a paint conditioner, a homogenizer, a high-shear stirring device (for example, product name: FILMIX® (FILMIX is a registered trademark in Japan, other countries, or both), produced by Primix Corporation), or a high-speed stirring device.

The total content of the carbon nanotubes (A) and the conductive carbon that is different from the carbon nanotubes (A) in the dispersion liquid for conductive film formation (ink) is preferably at least 0.001 mass% and no greater than 90 mass% of the entire dispersion liquid.

No specific limitations are placed on the transfer support other than enabling sufficient fixing of the conductive film during production thereof and being easily separable from the conductive film. The transfer support may for example be a synthetic resin sheet such as a PTFE (polytetrafluoroethylene) sheet or a PET (polyethylene terephthalate) sheet.

The dispersion liquid for conductive film formation can be applied onto the transfer support by a commonly known application method. Examples of application methods that can be used include dipping, roll coating, gravure coating, knife coating, air knife coating, roll knife coating, die coating, screen printing, spray coating, and gravure offset.

The resultant applied film can be dried by a commonly known drying method. Examples of drying methods that can be used include hot-air drying, hot-roll drying, and infrared irradiation.

Although no specific limitations are placed on the drying temperature and the drying time, the drying temperature is normally at least room temperature and no greater than 200°C, and the drying time is normally at least 0.1 minutes and no greater than 150 minutes.

The transfer support-mounted conductive film can be used to form a conductive layer, a catalyst layer, or a gas diffusion layer of an electrode or the like by a commonly known method such as a transfer method. Specifically, a particular substrate or the like is prepared, the substrate and the conductive film of the transfer support-mounted conductive film are pressure bonded using a hot press or the like, and the transfer support is subsequently removed in order to transfer the presently disclosed conductive film onto the surface of the substrate (in other words, a conductive layer, a catalyst layer, or a gas diffusion layer is formed on the surface of the substrate).

Alternatively, the presently disclosed conductive film may be formed directly on the surface of a particular substrate or the like without using a transfer support. In such a situation, the presently disclosed conductive film, which can function as a gas diffusion layer or a catalyst layer, is formed on the surface of a substrate or the like by applying the dispersion liquid for conductive film formation onto the surface of the substrate and drying the resultant applied film.

The presently disclosed conductive film includes the carbon nanotubes (A) and the conductive carbon that is different from the carbon nanotubes (A). As explained above, the average diameter (Av) of the carbon nanotubes (A) is at least 0.5 nm and no greater than 15 nm. Moreover, the average length of the carbon nanotubes (A) is preferably at least 0.1 µm and no greater than 1 cm. It is thought that as a result of the carbon nanotubes (A) used in the presently disclosed conductive film having shape characteristics such as described above, it is easy to obtain a conductive film having a structure formed by a network structure in which the carbon nanotubes (A) cross over one another. Accordingly, the conductive film has excellent conductivity and gas diffusivity. Furthermore, dispersibility and film production properties are improved when the carbon nanotubes (A) are surface treated carbon nanotubes. Also, when the carbon nanotubes (A) support metal nanoparticles, the resultant conductive film has excellent conductivity, gas diffusivity, and catalytic activity.

As a result of the properties described above, the presently disclosed conductive film can be beneficially used as a gas diffusion layer or a catalyst layer of an electrode in a fuel cell. Among the examples described above, a conductive film (hereinafter also referred to as "conductive film α") including carbon nanotubes (A) that do not support metal nanoparticles and a conductive carbon that is different from the carbon nanotubes (A) is useful as a material forming a fuel cell-use gas diffusion layer. Furthermore, a conductive film (hereinafter also referred to as "conductive film β") including carbon nanotubes (A) that support metal nanoparticles and a conductive carbon that is different from the carbon nanotubes (A) is useful as a material forming a fuel cell-use catalyst layer.

Note that the presently disclosed conductive film can optionally be stacked with a known functional layer, such as an overcoating layer, and then be used in various products. Stacking of a functional layer, such as an overcoating layer, on the conductive film can be performed by a known method.

Furthermore, the presently disclosed conductive film is also suitable for use as a conductive layer that is formed on a transparent substrate and that constitutes a touch sensor of a touch panel, such as a capacitive touch panel. The presently disclosed conductive film can also be used as a conductive layer constituting an electrode of a solar cell, such as a dye-sensitized solar cell. More specifically, the presently disclosed conductive film can be used as a conductive layer constituting a photoelectrode of a dye-sensitized solar cell, or as either or both of a conductive layer or a catalyst layer constituting a counter electrode of a dye-sensitized solar cell.

### (2) Fuel cell-use gas diffusion layer and fuel cell-use catalyst layer

### <Fuel cell-use gas diffusion layer>

A presently disclosed fuel cell-use gas diffusion layer (hereinafter also referred to as a "presently disclosed gas diffusion layer") is formed by the presently disclosed conductive film (α). The presently disclosed gas diffusion layer may be a laminate of the conductive film (α) and a substrate such as carbon paper.

Although no specific limitations are placed on the thickness of the presently disclosed gas diffusion layer, the thickness is normally at least 100 nm and no greater than 10 mm.

The presently disclosed gas diffusion layer can be formed through a transfer method using a transfer support-mounted gas diffusion layer obtained through application of the ink described above or through direct application of the ink onto the substrate.

### <Fuel cell-use catalyst layer>

A presently disclosed fuel cell-use catalyst layer (hereinafter also referred to as a "presently disclosed catalyst layer") is formed by the presently disclosed conductive film (β), which includes carbon nanotubes (A) that support metal nanoparticles and a conductive carbon that is different from the carbon nanotubes (A).

In particular, the total blended amount of the carbon nanotubes (A) and the conductive carbon that is different from the carbon nanotubes (A) included in the presently disclosed fuel cell-use catalyst layer is preferably at least 0.0001 mg/cm² and no greater than 300 mg/cm², and more preferably at least 0.05 mg/cm² and no greater than 100 mg/cm².

The presently disclosed catalyst layer can be formed through a transfer method using a transfer support-mounted catalyst layer obtained through application of the ink described above onto a transfer support or through direct application of the ink onto a substrate.

### (3) Fuel cell-use electrode, fuel cell-use membrane-electrode assembly, and fuel cell

### <Fuel cell-use electrode>

A presently disclosed fuel cell-use electrode includes either or both of the presently disclosed fuel cell-use gas diffusion layer and the presently disclosed fuel cell-use catalyst layer. The presently disclosed fuel cell-use electrode has excellent conductivity and gas diffusivity.

The presently disclosed fuel cell-use electrode can be produced by forming the presently disclosed gas diffusion layer with respect to the presently disclosed fuel cell-use catalyst layer or another fuel cell-use catalyst layer by a commonly known method such as the transfer method described above. Alternatively, the presently disclosed fuel cell-use electrode can be produced without using a transfer method or the like, by directly applying a dispersion liquid for gas diffusion layer formation obtained as described above with respect to the presently disclosed fuel cell-use catalyst layer or another fuel cell-use catalyst layer.

Furthermore, the presently disclosed fuel cell-use electrode can be produced by forming the presently disclosed catalyst layer with respect to the presently disclosed fuel cell-use gas diffusion layer or another fuel cell-use gas diffusion layer by a commonly known method such as the transfer method described above. Alternatively, the presently disclosed fuel cell-use electrode can be produced without using a transfer method or the like, by directly applying a dispersion liquid for catalyst layer formation obtained as described above with respect to the presently disclosed fuel cell-use gas diffusion layer or another fuel cell-use gas diffusion layer.

### <Fuel cell-use membrane-electrode assembly>

A presently disclosed fuel cell-use membrane-electrode assembly includes the presently disclosed fuel cell-use electrode and an electrolyte membrane.

The presently disclosed fuel cell-use membrane-electrode assembly can for example be produced through a step (1) of forming a catalyst layer by applying, onto the electrolyte membrane, a dispersion liquid for catalyst layer formation (1) including metal nanoparticle-supporting carbon nanotubes having an average diameter (Av) and a diameter standard deviation (σ) satisfying the relationship 0.60 > (3σ/Av) > 0.20 and a conductive carbon that is different from the carbon nanotubes, and drying the resultant applied film; and a step (2) of forming a gas diffusion layer by applying, onto the catalyst layer formed in step (1), a dispersion liquid for gas diffusion layer formation (2) including carbon nanotubes having an average diameter (Av) and a diameter standard deviation (σ) satisfying the relationship 0.60 > (3σ/Av) > 0.20 and a conductive carbon that is different from the carbon nanotubes, and drying the resultant applied film. Note that in the presently disclosed fuel cell-use membrane-electrode assembly, at least one of the catalyst layer and the gas diffusion layer includes carbon nanotubes satisfying the relationship 0.60 > (3σ/Av) > 0.20 and a conductive carbon that is different from the carbon nanotubes.

Step (1) involves forming the catalyst layer by applying, onto the electrolyte membrane, the dispersion liquid for catalyst layer formation (1) including the metal nanoparticle-supporting carbon nanotubes having an average diameter (Av) and a diameter standard deviation (σ) satisfying the relationship 0.60 > (3σ/Av) > 0.20 and the conductive carbon that is different from the carbon nanotubes, and drying the resultant applied film. Herein, the electrolyte membrane can be a conventional, commonly known electrolyte membrane. For example, the electrolyte membrane may be a fluorine-containing electrolyte membrane such as a perfluorocarbon sulfonic acid resin membrane or a hydrocarbon-based electrolyte membrane such as a poly(trifluorostyrene) sulfonic acid resin membrane. Although no specific limitations are placed on the thickness of the electrolyte membrane, the thickness is normally at least 50 nm and no greater than 10 mm.

The catalyst layer can be formed in step (1) in the same way as the method of directly forming a conductive film on the surface of a particular substrate or the like, without using a transfer support, described in the section relating to the conductive film.

When forming the catalyst layer in step (1), a cathode catalyst layer and an anode catalyst layer may be formed at the same time, or the cathode catalyst layer and the anode catalyst layer may be formed separately.

In a situation in which the cathode catalyst layer and the anode catalyst layer are to be formed at the same time, a dipping method can be used in which the electrolyte membrane is immersed in the dispersion liquid for catalyst layer formation (1).

In a situation in which the cathode catalyst layer and the anode catalyst layer are to be formed separately (i.e., in a situation in which only one of the catalyst layers is to be formed), the dispersion liquid for catalyst layer formation (1) is applied onto one surface of the electrolyte membrane and dried to form one of the catalyst layers, and the dispersion liquid for catalyst layer formation (1) is subsequently applied onto the other surface of the electrolyte membrane and dried to form the other of the catalyst layers.

The dispersion liquid for catalyst layer formation (1) can be applied by a commonly known application method such as roll coating, gravure coating, knife coating, air knife coating, roll knife coating, die coating, screen printing, spray coating, and gravure offset.

Step (2) involves forming the gas diffusion layer by applying, onto the catalyst layer formed in step (1), the dispersion liquid for gas diffusion layer formation (2) including carbon nanotubes having an average diameter (Av) and a diameter standard deviation (σ) satisfying the relationship 0.60 > (3σ/Av) > 0.20 and a conductive carbon that is different from the carbon nanotubes, and drying the resultant applied film.

Step (2) can be performed by the same method as step (1) with the exception that the dispersion liquid that is used is different from step (1).

### <Fuel cell>

A presently disclosed fuel cell includes the presently disclosed fuel cell-use membrane-electrode assembly.

The presently disclosed fuel cell can be produced by providing separators by a commonly known method with respect to the fuel cell-use membrane-electrode assembly obtained as described above.

FIG. 1 illustrates an example of the presently disclosed fuel cell.

A fuel cell (1) illustrated in FIG. 1 includes a membrane-electrode assembly (2) and separators (3). The separators (3) include a cathode-side separator (3a) and an anode-side separator (3b).

The membrane-electrode assembly (2) is the presently disclosed membrane-electrode assembly. The membrane-electrode assembly (2) includes an electrolyte membrane (4), an air electrode (5) disposed at one side of the electrolyte membrane (4) and a fuel electrode (6) disposed at the other side of the electrolyte membrane (4).

The air electrode (5) and the fuel electrode (6) are each the presently disclosed fuel cell-use electrode. The air electrode (5) includes a cathode catalyst layer (7) and a cathode-side gas diffusion layer (8). The fuel electrode (6) includes an anode catalyst layer (9) and an anode-side gas diffusion layer (10).

The separators (3) can be conventional, commonly known separators and no specific limitations are placed thereon. Examples include separators made from metal materials such as iron, titanium, aluminum, and alloys thereof; carbon-based materials such as carbon graphite and carbon plate; and high-molecular mass materials provided with conductivity by various metal materials and carbon-based materials (conductive plastics).

No specific limitations are placed on the electrolyte membrane (4), which can be any of the examples listed in relation to the fuel cell-use membrane-electrode assembly.

### EXAMPLES

### (Example 1)

### (Platinum nanoparticle support treatment of carbon nanotubes)

A 30 mL glass vessel was charged with 10 mg of ozone treated SGCNTs (described further below) as the carbon nanotubes (A) and ethylene glycol (special grade produced by Wako Pure Chemical Industries, Ltd.) as a combined reductant and solvent, and dispersion was performed for 30 minutes using an ultrasonic homogenizer equipped with a circulative cooling unit (product name: UX-300, produced by Mitsui Electric Co., Ltd., conditions: 300 W, 20 kHz). H₂PtCl₆·H₂O (special grade produced by Wako Pure Chemical Industries, Ltd.) was added to the resultant ozone treated SGCNT/ethylene glycol dispersion liquid such as to obtain the specific supported amount of platinum nanoparticles shown in Table 1, and was dissolved by ultrasound irradiation. Thereafter, a 1 mol/L NaOH/ethylene glycol solution was added in order to adjust the pH of the dispersion liquid to 10. The dispersion liquid was transferred to a three-neck flask (200 mL) and was caused to react under reflux at 140°C for 3 hours. Once the reaction was complete, the dispersion liquid was cooled to room temperature. Next, 30 mL of a 1:1 water/ethanol mixed solution was added to the dispersion liquid, centrifugal separation was performed, a supernatant liquid was removed by decantation, and a further 30 mL of the 1:1 water/ethanol mixed solution was added (washing operation). The washing operation was repeated 6 times. Through the above, a platinum nanoparticle-supporting SGCNT solution was obtained. The supported platinum nanoparticles had an average particle diameter of 3 nm.

Note that pre-ozone treatment SGCNTs were prepared, in accordance with the description in WO2006/011655, by a super growth method, wherein a catalyst layer was formed on a substrate surface by a wet process and a feedstock gas having acetylene as a main component was used. The SGCNTs were mainly single-walled CNTs having a BET specific surface area according to nitrogen gas adsorption of 804 m²/g, a BET specific surface area according to water vapor adsorption of 2.4 m²/g, a ratio of these specific surface areas of 0.003, a CO desorption of 797 µmol/g, a CO₂ desorption of 292 µmol/g, and a micropore volume of 0.44 mL/g. Moreover, the average diameter (Av) was 3.3 nm, 3σ was 1.9 nm, 3σ/Av was 0.58, and the average length was 500 µm.

Ozone treated SGCNTs were obtained as follows. A 500 mL pear-shaped flask was charged with 1 g of the above-described SGCNTs and was connected to an evaporator. A mixed gas of ozone and air from an ozone generating device was caused to flow at normal pressure in a gas channel of the evaporator for 6 hours at room temperature and with an ozone concentration of 20 g/Nm³ and a flow rate of 600 mL/minute, and a reaction was carried out while rotating the pear-shaped flask using the evaporator. The resultant ozone treated SGCNTs had a BET specific surface area according to nitrogen gas adsorption of 1,307 m²/g, a BET specific surface area according to water vapor adsorption of 93 m²/g, a ratio of these specific surface areas of 0.071, a CO desorption of 5,507 µmol/g, a CO₂ desorption of 1,425 µmol/g, and a micropore volume of 0.45 mL/g. Moreover, the average diameter (Av) was 3.3 nm, 3σ was 1.9 nm, 3σ/Av was 0.58, and the average length was 500 µm.

Herein, the aforementioned specific surface areas were obtained as a BET specific surface area according to nitrogen adsorption and a BET specific surface area according to water vapor adsorption through a BET method by measuring adsorption isotherms of a measurement sample for nitrogen (temperature: 77K) and distilled water (temperature: 298 K) using a BELSORP®-max produced by Bel Japan Inc.

The CO and CO₂ desorptions described above were obtained by loading a measurement sample in a TPD-1-ATw fully-automated temperature programmed desorption spectrometer produced by Bel Japan Inc., causing a carrier gas (He) to flow at 50 mL/minute, heating from 150°C to 950°C at a heating rate of 5°C/minute, detecting CO and CO₂ produced during the heating using a quadrupole mass spectrometer, and calculating the amount of each gas (µmol) produced per 1 g of the measurement sample from the amounts of CO and CO₂ gases produced.

### (Ink preparation and evaluation sample production)

The platinum nanoparticle-supporting SGCNTs prepared as described above and a conductive carbon in the form of Ketjen black (hereinafter KB, EC600JD produced by Lion Specialty Chemicals Co., Ltd., G band half width 60 cm⁻¹) were mixed such as to obtain the specific blending amount and blending ratio (mass ratio) shown in Table 1, and were added to a 1:1 water/ethanol mixed solution such as to be present in an amount of 0.1 g/L. An ionomer in the form of a 10% Nafion solution (DE1020 produced by Wako Pure Chemical Industries, Ltd.) was further added as a dispersant in a mass ratio of 0.6 relative to the total carbon content (total mass of the SGCNTs and KB), and dispersion was performed for 10 minutes using the ultrasonic homogenizer described above. An ink including the SGCNTs and KB was obtained as a result of the above process. The prepared ink was pulse sprayed onto a gas diffusion layer 24BCH (produced by SGL Carbon Japan Co., Ltd.) in order to form a catalyst layer composed of a conductive film having the specific mass per unit area of platinum nanoparticles shown in Table 1. An electrode including the gas diffusion layer and the catalyst layer obtained as described above was used as an evaluation sample for a gas permeability test. The evaluation sample was evaluated according to the following method. The results are shown in Table 1.

### (Gas permeability test method)

The evaluation sample prepared as described above was cut to 2.5 cm × 2.5 cm in size and was set in an evaluation cell. N₂ gas was caused to flow at 500 cc/minute such as to pass through the sample (cell temperature 80°C, humidity 100 RH). Pressure at a gas inlet (pressure loss) during the above was measured to obtain a measured value X, and gas permeability was evaluated in accordance with the following standard. Note that a lower measured pressure indicates better gas diffusivity.
A: X ≤ 20 kPa
B: 20 kPa < X < 50 kPa
C: 50 kPa ≤ X

### (Catalytic activity and conductivity evaluation methods)

The ink prepared as described above was applied onto a glassy carbon rod (surface area: 0.196 cm²) by pulse spraying in order to obtain the specific mass per unit area of platinum nanoparticles shown in Table 1. The prepared rod was used as a working electrode. A platinum coil isolated by a porous glass filter was used as a counter electrode. Hg/Hg₂SO₄/sat-K₂SO₄ having a double junction structure was used as a reference electrode. A five-neck glass cell was used as a measurement cell. An electrolyte was used that was prepared by adjusting 60% perchloric acid (precision analysis use produced by Wako Pure Chemical Industries, Ltd.) to 0.1 M with Milli-Q water. N₂ gas having a purity of 99.9999% was used as a measurement gas. Electrochemical measurement was performed using an electrochemical measurement system (produced by Solartron Analytical) and using an HR-201 and an HR-202 produced by Hokuto Denko Corp. as rotating electrode devices.

Using the above described equipment and materials, a mass activity value in the electrolyte solution was measured with the electrolyte solution saturated with oxygen through ventilation of O₂ gas, and with a lower limit potential of 0.05 V, an upper limit potential of 1.0 V, a sweep rate of 10 mVs⁻¹, and an electrode rotation rate of 1,600 rpm. The mass activity at 0.9 V was taken to be a value Y which was evaluated in accordance with the following standard. The evaluation results are shown in Table 1. A high Y value, and thus a high mass activity (A/mg) at 0.9 V, indicates that redox reaction activity is high, and that catalytic activity and conductivity are good.
A: 0.1 ≤ Y
B: 0.05 ≤ Y < 0.1
C: 0.03 ≤ Y < 0.05
D: Y < 0.03

### (Examples 2 and 3)

Platinum nanoparticle-supporting SGCNT solutions were obtained and inks and evaluation samples were produced in the same way as in Example 1 with the exception that the mass ratio of the platinum nanoparticle-supporting SGCNTs and KB was changed as shown in Table 1. Evaluation was performed in the same way as in Example 1. The results are shown in Table 1.

### (Examples 4-6)

Platinum nanoparticle-supporting SGCNT solutions were obtained and inks and evaluation samples were produced in the same way as in Example 1 with the exception that a mass ratio of the pre-ozone treatment SGCNTs and KB was set as shown in Table 1. Evaluation was performed in the same way as in Example 1. The results are shown in Table 1.

### (Comparative Example 1)

An ink and an evaluation sample were produced in the same way as in Example 1 with the exception that KB was not mixed in during production of the evaluation sample. Evaluation was performed in the same way as in Example 1. The results are shown in Table 1.

**[Table 1]**

| | | | Example 1 | Example 2 | Example 3 | Example 4 | Example 5 | 6 Example | Comparative Example 1 |
|---|---|---|---|---|---|---|---|---|---|
| Conductive film | Carbon | Surface treatment | Yes | Yes | Yes | No | No | No | Yes |
| | | Blended amount [mg/cm²] | 0.02 | 0.02 | 0.02 | 0.02 | 0.02 | 0.02 | 0.02 |
| | | SGCNTs:KB [mass ratio] | 9:1 | 5:5 | 1:9 | 9:1 | 5:5 | 1:9 | 10:0 |
| | Platinum nanoparticles | Supported amount [mass%] | 30 | 30 | 30 | 30 | 30 | 30 | 30 |
| | | Mass per unit area [mgPt/cm²] | 0.006 | 0.006 | 0.006 | 0.006 | 0.006 | 0.006 | 0.006 |
| Evaluation | Gas diffusivity | | A | A | B | B | B | B | C |
| | Catalyst activity/conductivity | | B | B | A | B | B | B | D |

As outlined in detail above, the gas permeability test results are evaluated as A (low pressure level, best grade gas diffusivity) - C (high pressure level, worst grade gas diffusivity) in Table 1.

Likewise, the catalytic activity and conductivity results are evaluated as A (high mass activity, best grade catalytic activity and conductivity) - D (low mass activity, worst grade catalytic activity and conductivity) in Table 1.

As clearly demonstrated by Examples 1-6 and Comparative Example 1, the evaluation samples that each included a catalyst layer formed by a conductive film in accordance with the present disclosure displayed excellent gas diffusivity. Moreover, the conductive films in accordance with the present disclosure were shown to have superior catalytic activity and conductivity to the conductive film according to Comparative Example 1.

### INDUSTRIAL APPLICABILITY

The present disclosure can provide a conductive film having excellent conductivity and gas diffusivity that is useful, for example, as a material forming a gas diffusion layer or a catalyst layer of an electrode in a fuel cell, and can also provide a fuel cell-use gas diffusion layer, a fuel cell-use catalyst layer, a fuel cell-use electrode, and a fuel cell-use membrane-electrode assembly. Furthermore, the present disclosure can provide a fuel cell having excellent conductivity and gas diffusivity, and displaying good electrical characteristics.

### REFERENCE SIGNS LIST

- 1: fuel cell
- 2: membrane-electrode assembly
- 3: separator
- 4: electrolyte membrane
- 5: air electrode
- 6: fuel electrode
- 7: cathode catalyst layer
- 8: cathode-side gas diffusion layer
- 9: anode catalyst layer
- 10: anode-side gas diffusion layer

## Claims

1. A conductive film comprising:
carbon nanotubes having an average diameter Av and a diameter standard deviation σ satisfying a relationship 0.60 > (3σ/Av) > 0.20; and
a conductive carbon that is different from the carbon nanotubes, wherein
a content ratio of the carbon nanotubes relative to the conductive carbon is from 1/99 to 99/1 as a mass ratio, wherein
the average diameter Av is at least 0.5 nm and no greater than 15 nm, and wherein
the conductive carbon consists of solely a conductive carbon other than carbon nanotubes.

2. The conductive film of claim 1, wherein
the carbon nanotubes satisfying the relationship 0.60 > (3σ/Av) > 0.20 support metal nanoparticles.

3. The conductive film of claim 2, wherein
the metal nanoparticles are platinum nanoparticles.

4. The conductive film of any one of claims 1-3, wherein
the carbon nanotubes satisfying the relationship 0.60 > (3σ/Av) > 0.20 are surface treated carbon nanotubes.

5. A fuel cell-use gas diffusion layer comprising the conductive film of claim 1 or 4.

6. A fuel cell-use catalyst layer comprising the conductive film of any one of claims 2-4.

7. A fuel cell-use electrode comprising either or both of the fuel cell-use gas diffusion layer of claim 5 and the fuel cell-use catalyst layer of claim 6.

8. A fuel cell-use membrane-electrode assembly comprising the fuel cell-use electrode of claim 7 and an electrolyte membrane.

9. A fuel cell comprising the fuel cell-use membrane-electrode assembly of claim 8.

## Patentansprüche

1. Ein leitfähiger Film umfassend:
Kohlenstoffnanoröhren, welche einen mittleren Durchmesser Av und eine Durchmesser-Standardabweichung σ haben, die ein Verhältnis 0,60 > (3σ/Av) > 0,20 erfüllen; und
einen leitfähigen Kohlenstoff, der von den Kohlenstoffnanoröhren verschieden ist, wobei
ein Gehaltsverhältnis der Kohlenstoffnanoröhren bezogen auf den leitfähigen Kohlenstoff von 1/99 bis 99/1 als Massenverhältnis ist, wobei
der mittlere Durchmesser Av mindestens 0,5 nm und nicht größer als 15 nm ist, und wobei
der leitfähige Kohlenstoff aus lediglich einem leitfähigen Kohlenstoff außer Kohlenstoffnanoröhren besteht.

2. Der leitfähige Film nach Anspruch 1, wobei
die Kohlenstoffnanoröhren, welche das Verhältnis 0,60 > (3σ/Av) > 0,20 erfüllen, Metallnanopartikel tragen.

3. Der leitfähige Film nach Anspruch 2, wobei
die Metallnanopartikel Platinnanopartikel sind.

4. Der leitfähige Film nach irgend einem der Ansprüche 1-3, wobei
die Kohlenstoffnanoröhren, welche das Verhältnis 0,60 > (3σ/Av) > 0,20 erfüllen, Oberflächen-behandelte Kohlenstoffnanoröhren sind.

5. Eine Gasdiffusionsschicht zur Brennstoffzellen-Nutzung umfassend den leitfähigen Film nach Anspruch 1 oder 4.

6. Eine Katalysatorschicht zur Brennstoffzellen-Nutzung umfassend den leitfähigen Film nach irgend einem der Ansprüche 2-4.

7. Eine Elektrode zur Brennstoffzellen-Nutzung umfassend eine oder beide der Gasdiffusionsschicht zur Brennstoffzellen-Nutzung nach Anspruch 5 und der Katalysatorschicht zur Brennstoffzellen-Nutzung nach Anspruch 6.

8. Eine Membran-Elektroden-Anordnung zur Brennstoffzellen-Nutzung umfassend die Elektrode zur Brennstoffzellen-Nutzung nach Anspruch 7 und eine Elektrolytmembran.

9. Eine Brennstoffzelle umfassend die Membran-Elektroden-Anordnung zur Brennstoffzellen-Nutzung nach Anspruch 8.

## Revendications

1. Film conducteur comprenant :
des nanotubes de carbone ayant un diamètre moyen Av et un écart type de diamètre σ satisfaisant à une relation 0,60 > (3σ/Av) > 0,20 ; et
un carbone conducteur qui est différent des nanotubes de carbone, dans lequel
un rapport de teneur des nanotubes de carbone par rapport au carbone conducteur est de 1/99 à 99/1 en tant que rapport en masse, dans lequel
le diamètre moyen Av est d'au moins 0,5 nm et pas plus de 15 nm, et dans lequel
le carbone conducteur est constitué uniquement d'un carbone conducteur autre que des nanotubes de carbone.

2. Film conducteur selon la revendication 1, dans lequel
les nanotubes de carbone satisfaisant à la relation 0,60 > (3σ/Av) > 0,20 sont un support pour des nanoparticules métalliques.

3. Film conducteur selon la revendication 2, dans lequel
les nanoparticules métalliques sont des nanoparticules de platine.

4. Film conducteur selon l'une quelconque des revendications 1 à 3, dans lequel
les nanotubes de carbone satisfaisant à la relation 0,60 > (3σ/Av) > 0,20 sont des nanotubes de carbone traités en surface.

5. Couche de diffusion de gaz d'utilisation de pile à combustible comprenant le film conducteur selon la revendication 1 ou 4.

6. Couche de catalyseur d'utilisation de pile à combustible comprenant le film conducteur selon l'une quelconque des revendications 2 à 4.

7. Électrode d'utilisation de pile à combustible comprenant l'un ou les deux de la couche de diffusion de gaz d'utilisation de pile à combustible selon la revendication 5 et la couche de catalyseur d'utilisation de pile à combustible selon la revendication 6.

8. Ensemble d'électrode à membrane d'utilisation de pile à combustible comprenant l'électrode d'utilisation de pile à combustible selon la revendication 7 et une membrane d'électrolyte.

9. Pile à combustible comprenant l'ensemble d'électrode à membrane d'utilisation de pile à combustible selon la revendication 8.
